# EUROPÄISCHE PATENTANMELDUNG

(11) **EP 1 637 745 A2**
(43) Veröffentlichungstag der Anmeldung: **22.03.2006**
(21) Anmeldenummer: 05019171.7
(22) Anmeldetag: 03.09.2005
(51) Int. Cl.: F15B 13/04

(54) **Anschlusssystem für ein hydraulisches System**

(30) Priorität: 21.09.2004 DE 102004045645
(71) Anmelder: LuK Lamellen und Kupplungsbau Beteiligungs KG, 77815 Bühl (DE)
(72) Erfinder: Rammhofer, Thomas, 77880 Sasbach (DE); Grabenstätter, Jan, 76593 Gernsbach (DE)

(57) **Zusammenfassung**

Die Erfindung betrifft ein hydraulisches System, insbesondere für Kraftfahrzeuge, umfassend ein Druckmediumreservoir (14), einen Geberzylinder (4), der mit einem ersten Leitungsstrang (11) einer Druckmediumsleitung (15) verbunden ist, einen Nehmerzylinder (5), der mit einem zweiten Leitungsstrang (12) einer Druckmediumsleitung (15) verbunden ist, wobei mindestens eine dieser Komponenten mit Druckmedium vorbefüllt ist, mindestens einer hydraulischen Steckverbindung (2) bestehend aus einem mit einem Ventil (28) versehenem Steckteil (16), das den Austritt von Druckmedium aus diesem verhindert und einer Steckbuchse (17).

Das Problem, ein teilvorgefülltes hydraulisches System endzumontieren, indem das Steckteil und die Steckbuchse miteinander verbunden werden, wird dadurch gelöst, indem das Ventil des Steckteils beim Zusammenfügen mit der Steckbuchse direkt oder indirekt über einen als Drehmuffe ausgeführten Adapter geöffnet wird.

## Beschreibung

Die vorliegende Erfindung betrifft ein vorbefülltes hydraulisches System insbesondere für Kraftfahrzeuge, umfassend einen Geberzylinder mit Druckmediumsleitung, einen Nehmerzylinder mit Druckmediumsleitung und eine beide Druckmediumsleitungen verbindende Steckverbindung.

Bekannt sind Ausrücksysteme, in denen beispielsweise im Zeitpunkt der Lieferung Geber- und Nehmerzylinder sowie die beide verbindende Hydraulikleitung vorbefüllt sind (einteilige Lösung), oder ein erstes vorbefülltes Teilsystem (Geberzylinder mit einem Teil der Leitung) und ein zweites vorbefülltes Teilsystem (Nehmerzylinder mit einem Teil der Leitung) sind getrennt und jeweils für sich zunächst abgedichtet (zweiteilige Lösung) und werden dadurch verbunden, indem mit Hilfe eines aufwendigen Stecksystems beide Teilsysteme miteinander verbunden werden.

Der vorliegenden Erfindung liegt daher das Problem zugrunde, bereits vorbefüllte Teilkomponenten eines hydraulischen Systems mit Hilfe einer möglichst einfachen Steckverbindung schnell und sicher miteinander zu verbinden.

Dieses Problem wird gelöst durch ein hydraulisches System insbesondere für umfassend ein Druckmediumreservoir, einen Geberzylinder, der mit einem zweiten Leitungsstrang einer Druckmediumsleitung verbunden ist, einen Nehmerzylinder, der mit einem ersten Leitungsstrang einer Druckmediumsleitung, verbunden ist, wobei mindestens eine dieser Komponenten mit Druckmedium vorbefüllt ist, mindestens eine hydraulische Steckverbindung, bestehend aus einem mit einem Ventil versehenem Steckteil, das den Austritt von Druckmedium aus diesem verhindert, und einer Steckbuchse. Beim Zusammenfügen von Steckteil und Steckbuchse wird das Ventil geöffnet, wodurch das Druckmedium in alle Komponenten des hydraulischen Systems fließen kann.

Steckteil und Steckbuchse sind vorzugsweise so ausgelegt, dass das Zusammenfügen beider bzw. die Verriegelung, von Stecker und Drehmuffe/Stecker und Steckbuchse z. B. durch eine Drahtformfeder oder die Verriegelung von Drehmuffe und Steckbuchse mittels eines Bajonettverschlusses, sowie das Öffnen des Ventils ohne weitere manuelle Eingriffe möglich ist. Unter Zusammenfügen von Steckteil und Steckbuchse wird hier das Zusammenführen beider Teile bis zur miteinander verriegelten Stellung verstanden. Die Verriegelung als solche kann dabei wie bei einer Drahtformfeder Teil des Zusammensteckens sein oder sich wie bei einem Bajonettverschluss daran anschließen.

In einer Weiterbildung des hydraulischen Systems ist vorgesehen, dass das Steckteil ein auf einem zylinderförmigen Bereich des Steckteils angeordnetes und auf diesem axial verschiebbares Dichtelement umfasst, das in Verbindung mit in das Steckteil eingebrachten Querbohrung ein Ventil bildet und beim Zusammenfügen von Steckteil und Steckbuchse von einer ersten Stellung, in der dieses Ventil geschlossen ist, in eine zweite Stellung, in der es geöffnet ist, verschoben wird. Nach dem Öffnen des Ventils verbleibt das Dichtelement in dieser Stellung.

In einer Weiterbildung des hydraulischen Systems ist vorgesehen, dass das Dichtelement vorzugsweise eine Formdichtung ist, die eine Wulst aufweist, wobei diese vorzugsweise an der zur Steckbuchse abgewandten Seite des Dichtelementes angeordnet ist. Das Dichtelement ist Teil des Ventils und dient zu dessen Betätigung.

In einer Weiterbildung des hydraulischen Systems ist vorgesehen, dass das Dichtelement in zusammengesteckter Stellung von Steckteil und Steckbuchse Teil einer Dichtungsanordnung zwischen beiden Teilen ist, so dass auf weitere Dichtungen verzichtet werden kann.

Eine vorteilhafte Weiterbildung der erfindungsgemäßen Lösung sieht vor, dass der Stecker endseitig in Richtung Steckbuchse mit mindestens einer Nase versehen ist, die als Anschlag für das Dichtelement dient.

In einer Weiterbildung des hydraulischen Systems ist vorgesehen, dass das jeweilige Steckteil und Steckbuchse Mittel zur axialen Verriegelung beider Teile miteinander umfassen. Diese Mittel bestehen vorzugsweise aus einer umlaufenden Nut in Steckteil und Steckbuchse, in die eine Drahtformfeder in Form einer Halteklammer eingreifen kann.

In einer Weiterbildung des hydraulischen Systems ist vorgesehen, dass die Steckbuchse einen Steg aufweist, der beim Zusammenfügen von Steckteil und Steckbuchse an der Wulst des Dichtelements angreift und dieses damit in axialer Richtung gegenüber dem Steckteil verschiebt. Durch den vorzugsweise umlaufenden Steg wird das Dichtelement axial verschoben, so dass das Ventil geöffnet wird.

In einer Weiterbildung des hydraulischen Systems ist vorgesehen, dass der Stecker eine Drehmuffe umfasst, die drehbar am Stecker angeordnet ist und in einer ersten Drehstellung das Ventil schließt und in einer zweiten Drehstellung das Ventil öffnet. Die Ventilbetätigung erfolgt hier nicht durch das Zusammenstecken von Steckteil und Steckbuchse, sondern erst durch ein nachfolgendes Verdrehen beider gegeneinander.

In einer Weiterbildung des hydraulischen Systems ist vorgesehen, dass die Drehmuffe erste Eingriffsmittel aufweist, welche bei zusammengesteckter Drehmuffe und Steckbuchse mit an der Steckbuchse angeordneten zweiten Eingriffsmitteln eine drehfeste Verbindung zwischen Drehmuffe und Steckbuchse bilden. Die Eingriffsmittel können Aussparungen mit zugeordneten Vorsprüngen, Nut und federartige Eingriffsmittel, Verzahnungen oder dergleichen sein. Die Eingriffsmittel werden beim Zusammenfügen von Steckteil und Steckbuchse miteinander in Eingriff gebracht. Vorzugsweise ist entweder das Steckteil oder die Steckbuchse zweiteilig ausgebildet, wobei jeweils ein erster Teil gegenüber einem leitungsfesten zweiten Teil verdrehbar ist. Vorzugsweise umfasst das Steckteil einen Stecker und eine Drehmuffe, die drehbar miteinander verbunden und axial mittels einer Halteklammer gegeneinander fixiert sind. Zur Abdichtung beider Steckerteile können O-Ringe oder dergleichen vorgesehen sein.

In einer Weiterbildung des hydraulischen Systems ist vorgesehen, dass die Drehmuffe und die Steckbuchse durch einen Bajonettverschluss gegeneinander verriegelt werden können. Dadurch erfolgt gleichzeitig die Verdrehung beider gegeneinander, so dass das Ventil geöffnet wird.

Das eingangs genannte Problem wird auch durch ein Verfahren zum Befüllen eines hydraulischen Systems gelöst, indem Geberzylinder, Nehmerzylinder und Druckmediumsleitung durch wiederholtes Betätigen des Geberzylinders befüllt werden. Das wiederholte Betätigen kann auch nach der Montage automatisch durch einen Kupplungsaktor mit einem Steuerungsprogramm durchgeführt werden.

Im Folgenden werden Ausführungsbeispiele der Erfindung anhand beiliegender Zeichnungen erläutert.

Dabei zeigen:
- Fig. 1: eine schematische Darstellung eines hydraulischen Systems zum Öffnen und Schließen einer Kupplung mit erfindungsgemäßer Lösung ;
- Fig. 2: die erfindungsgemäße Lösung in einer Steckverbindung;
- Fig. 3: die erfindungsgemäße Lösung bei zusammengeführtem Stecker und Steckbuchse.

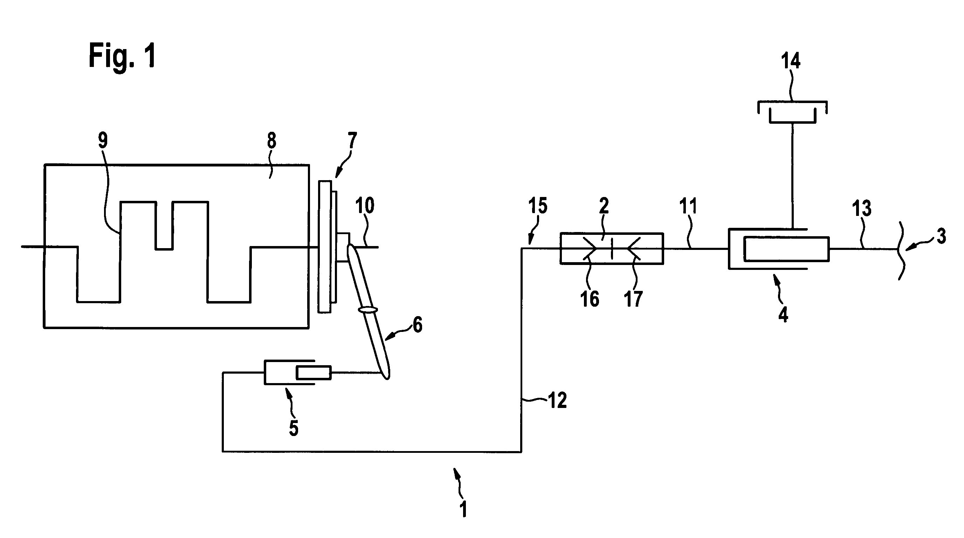

Fig. 1 zeigt in schematischer Darstellung eine mögliche Ausgestaltung eines hydraulischen Systems 1 zur Kupplungsbetätigung mit einer Ausrückvorrichtung 3, einem Geberzylinder 4, der mit einem Druckmediumreservoir 14 verbunden ist, einem Nehmerzylinder 5, sowie einer Ausrückmechanik 6, wobei alle Bauteile mit einer Druckmediumsleitung 15 hydraulisch verbunden sind. Eine Steckverbindung 2 ist im gezeigten Ausführungsbeispiel in eine diese verbindende Druckmediumsleitung 15 eingebaut, die zur Verbindung der in einen ersten Leitungsstrang 12 und einen zweiten Leitungsstrang 11 unterteilten Druckmediumsleitung 15 dient. Es versteht sich, dass in anderen Ausführungsbeispielen die Steckverbindung 2 beispielsweise am Geberzylinder 4 oder am Nehmerzylinder 5 angeordnet sein kann. Weiterhin kann in die Steckverbindung 2 gleichzeitig die Funktion eines Schwingungsfilters, beispielsweise ein so genannter "Kribbelfilter", integriert sein.

Das Kupplungsausrücksystem 3 betätigt die Kupplung 7 hydraulisch durch Beaufschlagung des Geberzylinders 4 mittels einer Ausrückvorrichtung 3, die als Pedal oder Aktor, beispielsweise als elektrischer Aktor oder dergleichen ausgestaltet sein kann. Hierdurch wird mittels einer mechanischen Übertragung 13 Druck im Geberzylinder 4 aufgebaut, der über die Druckmediumsleitung 15 bzw. zweitem Leitungsstrang 11, die Steckverbindung 2 und erstem Leitungsstrang 12 einen Druck im Nehmerzylinder 5 aufbaut. Der Nehmerzylinder 5 kann - nicht wie in Figur 1 dargestellt- eben so gut konzentrisch um die Getriebeeingangswelle 10 angeordnet sein und sich axial an einem - nicht dargestellten - Getriebegehäuse abstützen und die nötige Ausrückkraft über ein Ausrücklager an der Kupplung 7, beziehungsweise an deren Ausrückelementen, wie Tellerfeder, aufbringen. Weitere Ausführungsbeispiele können einen Nehmerzylinder 5, der über eine Ausrückmechanik einen Ausrücker betätigt und außerhalb der Kupplungsglocke angeordnet ist, vorsehen, wobei dieser mittels eines in hydraulischer Verbindung mit dem Geberzylinder 4 stehenden, im Gehäuse des Nehmerzylinders 5 untergebrachten, Kolbens die Ausrückmechanik axial beaufschlagt. Zum Aufbringen der Ausrückkraft ist der Nehmerzylinder 5 jeweils gehäusefest am Getriebegehäuse, das hier nicht näher dargestellt ist, oder an einem anderen gehäusefesten Bauteil angebracht. Die Getriebeeingangswelle 10 überträgt bei geschlossener Kupplung 7 das Drehmoment der Brennkraftmaschine 8 auf ein nicht näher dargestelltes Getriebe und anschließend auf die Antriebsräder eines Kraftfahrzeuges.

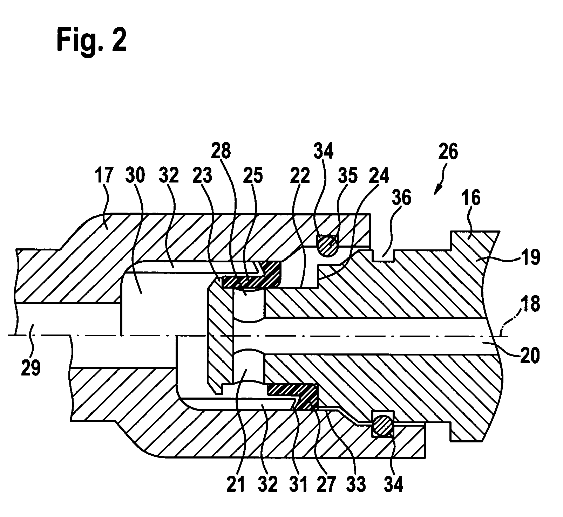

Figur 2 zeigt einen Stecker 16 sowie eine Steckbuchse 17, die zusammen zu einer Steckverbindung 2 gehören. Die Darstellung der Figur 2 ist zweigeteilt. Oberhalb einer axial verlaufenden Symmetrieachse 18 sind Stecker 16 und Steckbuchse 17 im nicht miteinander verbundenen Zustand während des Zusammensteckens dargestellt. Unterhalb der Symmetrieachse 18 sind beide im miteinander verbundenen und zusammengesteckten Zustand dargestellt. Der Stecker 16 umfasst einen Grundkörper 19, der im Wesentlichen rotationssymmetrisch, beispielsweise durch Spritzgießen oder Drehen oder dergleichen hergestellt sein kann. In diesem Grundkörper 19 ist eine Längsbohrung 20 eingebracht, die im vorderen Bereich des Grundkörpers 19 in eine Querbohrung 21 übergeht. Diese Querbohrung 21 kann, wie in Figur 2 dargestellt, ausgehend von der Symmetrieachse 18, in radialer Richtung in zwei Richtungen verlaufen. Sie kann aber auch ebenso aus einer Vielzahl von sternförmig angeordneten Bohrungen 21 oder auch nur aus einer einzigen radial von außen bis auf die Längsbohrung 20 eingebrachten Bohrung 21 bestehen. Der vordere Bereich des Grundkörpers 19 weist des Weiteren einen zylinderförmigen Bereich 22 auf, der im Querschnitt im Wesentlichen kreisförmig und im Längsschnitt gemäß der Darstellung der Figur 2 einen konstanten Radius besitzt. Der zylinderförmige Bereich 22 wird nach vorn durch eine Nase 23 begrenzt und nach hinten durch einen Absatz 24.

Die Begriffe vorn und hinten bezüglich des Steckers 16 beziehen sich auf die übliche Anwendung von Steckern 16 und Steckbuchsen 17. Sowohl beim Stecker 16 als auch bei der Steckbuchse 17 wird die Richtung, in der beide zusammengefügt werden, jeweils als vorn bezeichnet. In der Darstellung der Figur 2 ist bezüglich des Steckers 16 die auf dem Blatt linke Seite des Steckers 16 vorn, die rechte Seite des Steckers 16 entsprechend hinten. Bezüglich der Steckbuchse 17 ist die rechte Blattseite vorn und die linke Blattseite hinten.

Die Nase 23 kann in Umfangsrichtung umlaufend ausgebildet sein. Ebenso kann diese aber auch aus mehreren einzelnen Segmenten bestehen, die zum Beispiel sternförmig über den Umfang des Grundkörpers 19 verteilt sind.

In dem zylinderförmigen Bereich 22 ist ein Dichtelement 25 in axialer Richtung verschiebbar angeordnet, mit anderen Worten nicht fest mit dem Grundkörper 19 verbunden. Die axiale Verschiebbarkeit des Dichtelements 25 auf dem zylinderförmigen Bereich 22 wird nach vorn durch die Nase 23 und nach hinten durch den Absatz 24 begrenzt. Das Dichtelement 25 besteht aus einer Formdichtung mit einer Wulst 27, deren Außendurchmesser größer ist als der Außendurchmesser der Formdichtung, so dass sich ein im Wesentlichen L-förmiger Längsschnitt ergibt. Das Dichtelement 25 kann vor dem Zusammenfügen von Stecker 16 und Steckbuchse 17 in eine vordere erste Position geschoben werden, in der dieses mindestens eine Querbohrung 21 verschließt und bei der Verbindung von Stecker 16 und Steckbuchse 17 in eine zweite hintere Position geschoben werden, wie diese im unteren Bereich der Figur 2 dargestellt ist. In dieser Position wird die mindestens eine Querbohrung 21 freigegeben. Die mindestens eine Querbohrung 21 bildet zusammen mit dem Dichtelement 25 ein Ventil 28, das in einer geschlossenen ersten Stellung, wie diese im oberen Bereich der Figur 2 dargestellt ist, die Längsbohrung 20 gegenüber der Steckbuchse 17 verschließt und in einer zweiten, geöffneten Stellung, wie diese im unteren Bereich der Figur 2 dargestellt ist, die Längsbohrung 20 gegenüber der Steckbuchse 17 öffnet.

Die Längsbohrung 20 des Steckers 16 ist dem Durchmesser des hier nicht dargestellten zweiten Leitungsstrangs 11 angepasst und die Längsbohrung 29 der Steckbuchse 17 dem Durchmesser des in der Figur 2 nicht dargestellten ersten Leitungsstrangs 12, da Stecker 16 und Steckbuchse 17 mit den entsprechenden Teil-Leitungssträngen verbunden sind.

Die Steckbuchse 17 umfasst eine Bohrung 30, in die der Stecker 16 eingeführt werden kann. In der Bohrung 30 befinden sich Stege 31, so dass sich der Innendurchmesser der Bohrung 30 nach vorn hin stufenweise vergrößert. In einem ersten Bereich 32 entspricht der Innendurchmesser der Bohrung 30 dem Außendurchmesser des Dichtelements 25. In einem zweiten Bereich 33 entspricht der Innendurchmesser der Bohrung 30 dem Außendurchmesser der Wulst 27. Diese geometrische Gestaltung hat zur Folge, dass der Stecker 16 bis zu einer Position, wie diese im oberen Bereich der Darstellung der Figur 2 gezeigt ist, in die Bohrung 30 eingeschoben werden kann, wodurch sich die Wulst 27 an den Steg 31 anlegt. Die Wulst 27 dichtet nunmehr nach außen hin ab und die Verbindung ist damit dicht. Wird der Stecker 16 weiter in die Bohrung 30 eingeschoben, wird das Dichtelement 25 in dem zylinderförmigen Bereich 22 soweit nach hinten verschoben, bis die Rückseite der Wulst 27 am Absatz 24 anliegt. Wie aus der unteren Darstellung der Figur 2 zu erkennen ist, wird in diesem Fall die mindestens eine Querbohrung 21 von dem Dichtelement 25 freigegeben, so dass das Ventil 28 geöffnet ist und ein Durchfluss von Druckmedium zwischen der Längsbohrung 20 und der Längsbohrung 29 erfolgen kann. Das Dichtelement 25 bildet in der zusammengesteckten Position von Stecker 16 und Steckbuchse 17 zusammen mit dessen Wulst 27 gleichzeitig die Dichtung zwischen beiden Oberflächen. Zusätzlich können weitere, hier nicht dargestellte, Dichtelemente vorhanden sein, wie beispielsweise in Form von O-Ringen oder dergleichen. In einer Nut 34 der Steckbuchse 17 ist eine Drahtformfeder 35 in Form einer Haltefeder angeordnet, die mit einer Nut 36 in dem Stecker 16 eine an sich bekannte Rastverbindung beider Steckelemente 16 und 17 bildet. Wird die Verbindung zwischen Stecker 16 und Steckbuchse 17 gelöst, bleibt das Ventil 28 geöffnet, wobei das Dichtelement 25 in der in Figur 2 im unteren Bereich dargestellten Stellung verbleibt. Somit kann Hydraulikflüssigkeit aus dem Stecker 16 austreten.

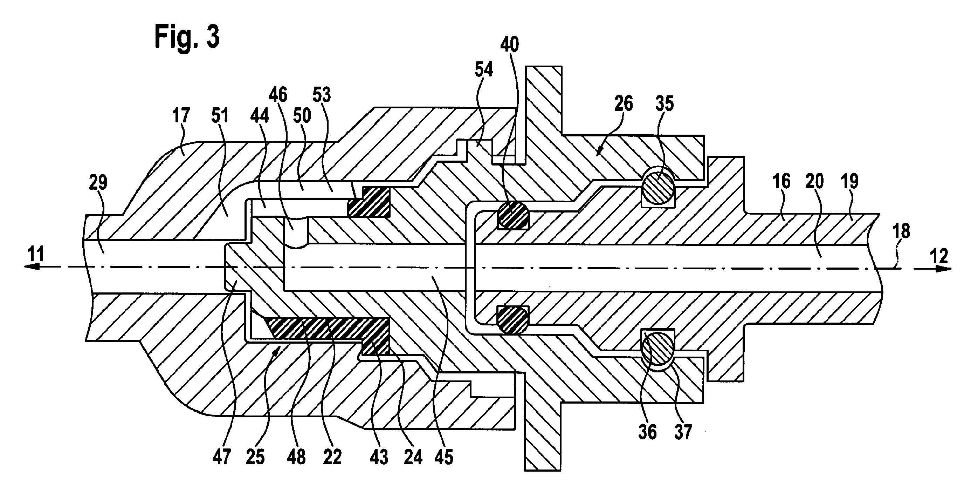

Figur 3 zeigt eine weitere Ausgestaltung der erfindungsgemäßen Lösung in einer Steckverbindung 2. Dargestellt sind ein Stecker 16 und eine Steckbuchse 17 in montierter, das heißt zusammengesteckter Stellung, wobei beide über eine Drehmuffe 26 miteinander verbunden sind. Der Stecker 16 umfasst im Wesentlichen einen Grundkörper 19, der fest mit einer hier nicht näher dargestellten Druckmediumsleitung verbunden ist. An diesem Grundkörper 19 ist eine Drehmuffe 26 um die axiale Achse 18 drehbar gelagert. Drehmuffe 26 und Stecker 16 sind in an sich bekannter Weise mittels O-Ring 40 gegeneinander abgedichtet, der in der entsprechenden Nut am Stecker 16 angeordnet ist. Eine Drahtformfeder 35, die in die vorgesehenen Nuten 36, 37 von Stecker und Drehmuffe 26 eingreift, dient als Halteklammer dazu, dass Stecker 16 und Drehmuffe 26 form- und kraftschlüssig miteinander verbunden sind. Der Stecker 16 weist in seinem vorderen Bereich, ähnlich wie die anhand der Figur 2 dargestellte Ausführungsform, einen zylinderförmigen Bereich 22 auf, der durch einen Absatz 24 nach hinten begrenzt wird. Auf diesem zylinderförmigen Bereich 22 ist ein Dichtelement 25 in Form einer Formdichtung mit einer Wulst 43 angeordnet. Das Dichtelement 25 ist um eine Symmetrieachse 18 drehbar auf dem zylinderförmigen Bereich 22 angeordnet. Das Dichtelement 25 ist über Teile seines Umfanges in Form einer Aussparung 44 ausgeschnitten. Die Aussparung 44 kann beispielsweise nach Art eines Langloches in das Dichtelement 25 eingebracht sein oder eine von der zylindrischen Form abweichende Kontur (in der Darstellung der Figur 3 von oben rechts nach unten links - also vorzugsweise schräg) aufweisen, die eine Freistellung der Bohrung 46 ermöglicht. Sowohl im Stecker 16 als auch in der Drehmuffe 26 ist fluchtend eine Längsbohrung 45 eingebracht, die nach Art einer Sacklochbohrung in der Drehmuffe 26 nach vorn hin begrenzt wird. Im vorderen Bereich des zylinderförmigen Bereiches 22 ist eine Querbohrung 46 angeordnet. Durch Drehen der Drehmuffe 26 und damit des zylinderförmigen Bereiches 22 wird die Querbohrung 46 unter dem Dichtelement 25 so verdreht, dass dadurch die Querbohrung 46 verschlossen wird. In einer anderen Drehstellung wird die Aussparung 44 über die Querbohrung 46 gebracht, so dass die Querbohrung 46 geöffnet ist. Auch hier bilden, wie in Figur 2, die Querbohrung, die hier die Nummer 46 trägt und das Dichtelement 25 ein Ventil 48, das in einer ersten Stellung verschlossen und in einer zweiten Stellung geöffnet ist. Die Steckbuchse 17 umfasst eine Bohrung 50 zur Aufnahme der mit dem Stecker 16 verbundenen Drehmuffe 26. Die Bohrung 50 weist in ihrem hinteren Bereich einen Kanal 51 auf, der nach Art einer Aussparung die Bohrung 50 in Längsrichtung der Steckbuchse 17 nach hinten hin vergrößert. Diese Maßnahme hat den Zweck, dass eine zylindrische Verlängerung 47 der Drehmuffe 26 in die Längsbohrung 29 der Steckbuchse 17 eingreifen kann ohne den Durchfluss eines Hydraulikfluids zu behindern. Die Aussparung 44 ist auf der Innenseite der Bohrung 50 nachgebildet, so dass in zusammengestecktem Zustand eine Drehung des Dichtelements 25 gegenüber der Steckbuchse 17 verhindert wird.

Drehmuffe 26 und Steckbuchse 17 werden mittels eines Bajonettverschlusses 54 miteinander verbunden. Die Wulst 43 des Dichtelements 25 dient, vergleichbar mir dem in Figur 2 dargestellten Ausführungsbeispiel, der Abdichtung zwischen Steckbuchse 17 und Drehmuffe 26.

Die Steckbuchse 17 ist die nicht vorbefüllte und die Seite mit dem mit der Drehmuffe 26 verbundenen Stecker 16 die vorbefüllte Seite des Ausrücksystems. Um die Steckbuchse 17 mit dem Stecker 16 zu verbinden, wird der Stecker 16 mitsamt Drehmuffe 26 in die Steckbuchse 17 geschoben, wobei die Querbohrung 46 vom Dichtelement 25 verschlossen ist. Zum Abstützen der Drehmuffe 26 zur Steckbuchse 17 befindet sich am Ende des Steckers 16 eine Nase 23 (nicht dargestellt). Wird der Stecker 16 mitsamt Drehmuffe 26 in die Steckbuchse 17 geschoben und die Bajonettverbindung zum Einrasten entsprechend gedreht, wird dabei das Dichtelement 25 in Drehrichtung zur Steckbuchse 17 fixiert. Durch die Drehung der Drehmuffe 26 wird die Querbohrung 46 aus dem Dichtelement 25 herausgedreht, wodurch die Verbindung Dichtelement 25 - Querbohrung 46 und damit das Ventil 48 geöffnet wird. In zusammengestecktem Zustand dichtet die Wulst 43 des Dichtelements 25 die Steckbuchse 17 zur Drehmuffe 26 ab.

Zum Lösen der Verbindung Dichtelement 25 - Querbohrung 46 wird die Querbohrung 46 mit Hilfe einer Drehbewegung der Drehmuffe 26 unter dem Dichtelement 25 hindurchgedreht.

Nachfolgend wird die Montage des hydraulischen Systems beschrieben.

Vor der Montage beider Leitungsstränge 11 und 12 ist bereits ein Teil des Systems vorbefüllt. Der andere Leitungsstrang ist nicht befüllt. Vorteilhaft ist es, wenn davon ausgegangen wird, dass die Nehmerzylinderseite nicht befüllt und die Geberzylinderseite befüllt ist. Geberzylinderseitig ist das Dichtelement 25 gemäß der Figuren 2 bzw. 3 angeordnet. Die Nehmerzylinderseite sind der erste Leitungsstrang 12, der Geberzylinder 4 sowie das Druckmediumreservoir 14 mit Druckmedium befüllt, wobei der Kolben des Geberzylinders 4 soweit in Richtung Kupplung gedrückt ist, dass die innenliegende Dichtung (nicht dargestellt) den Zulauf von Druckmedium vom Druckmediumreservoir 14 absperrt. Mit Hilfe der Steckbuchse 17, die auf dem ersten Leitungsstrang 12 bereits vormontiert ist, wird dieses vorgefüllte Teilsystem abgedichtet.

Die Nehmerzylinderseite bzw. der zweite Leitungsstrang 11, in der sich noch kein Druckmedium befindet, ist mit dem Stecker 16 vormontiert.

Beim Verbinden beider Teilsysteme wird nun die mit der Drehmuffe 26 versehene Steckbuchse 17 in den Stecker 16 geschoben und so die Steckverbindung 2 hergestellt. Bei diesem Vorgang wird dabei das Ventil 28 beziehungsweise 48 geöffnet, so dass Druckmedium von der Geberzylinderseite zur Nehmerzylinderseite fließen kann. Die Entlüftung des hydraulischen Systems 1 erfolgt durch mehrmaliges Betätigen der Kupplungsausrückvorrichtung 3. Dabei werden die von der Nehmerzylinderseite bzw. vom ersten Leitungsstrang 12 in den zweiten Leitungsstrang bzw. den Geberzylinder 4 vorgedrungene Luftblasen über das Druckmediumreservoir 14 aus hydraulischen System 1 heraus befördert und über die Schnüffelposition des Kolbens des Geberzylinders 4 wird beim Rückhub Druckmedium aus dem Druckmediumreservoir 14 in das hydraulische System 1 eingebracht. Dieser Vorgang wird so lange mehrfach wiederholt, bis das gesamte hydraulische System 1 entlüftet wird. Dazu werden beispielsweise zehn Hübe mit einer Geschwindigkeit des Vorhubes von etwa 5 mm je Sekunde und einer Geschwindigkeit des Rückhubes von etwa 25 mm pro Sekunde ausgeführt. Die Haltezeit in der Schnüffelposition beträgt etwa 0,5 Sekunden. Die Haltezeit in der belasteten Position, bei der also der Kolben des Geberzylinders 4 in der vorderen Stellung ist, beträgt etwa 0,1 Sekunde. Nach diesen zehn Hüben werden weitere 27 Hübe über 5 mm bei gleichen Geschwindigkeiten von Vorhub und Rückhub wie die zehn vorherigen Hübe durchgeführt, die Haltezeit in der Schnüffelposition beträgt hier aber 1,1 Sekunde, die Haltezeit in der zugedrückten Position 0,1 Sekunde. Nach diesem Arbeitsgang ist das gesamte System entlüftet. Die Entlüftung dauert etwa 2 Minuten und kann beispielsweise durch ein automatisiertes Programm eines Kupplungsaktors durchgeführt werden.

### Bezugszeichenliste

- 1: Hydraulisches System
- 2: Steckverbindung
- 3: Kupplungsausrückvorrichtung
- 4: Geberzylinder
- 5: Nehmerzylinder
- 6: Ausrückmechanik
- 7: Kupplung
- 8: Brennkraftmaschine
- 9: Kurbelwelle
- 10: Getriebeeingangswelle
- 11: zweiter Leitungsstrang
- 12: zweiter Leitungsstrang
- 13: mechanische Übertragung
- 14: Druckmediumreservoir
- 15: Druckmediumsleitung
- 16: Stecker / Steckteil
- 17: Steckbuchse
- 18: Symmetrieachse
- 19: Grundkörper Stecker
- 20: Längsbohrung des Steckers
- 21: Querbohrung Stecker
- 22: Zylinderförmiger Bereich
- 23: Nase
- 24: Absatz
- 25: Dichtelement
- 26: Drehmuffe / Steckteil
- 27: Wulst
- 28: Ventil
- 29: Längsbohrung der Steckbuchse
- 30: Bohrung der Buchse
- 31: Steg
- 32: Erster Bereich
- 33: Zweiter Bereich

- 34: Nut in Steckbuchse für Drahtformfeder
- 35: Drahtformfeder / Halteklammer
- 36: Nut in Stecker
- 37: Nut in Drehbuchse
- 38: 40 O-Ring
- 41:
- 42:
- 43: Wulst
- 44: Aussparung / erste Eingriffsmittel
- 45: Längsbohrung
- 46: Querbohrung
- 47: Zylindrische Verlängerung
- 48: Ventil
- 50: Bohrung
- 51: Kanal
- 52:
- 53: Grat / zweite Eingriffsmittel
- 54: Bajonettverschluss

## Patentansprüche

1. Hydraulisches System (1), insbesondere für Kraftfahrzeuge, umfassend ein Druckmediumreservoir (14) einen Geberzylinder (4), der mit einem zweiten Leitungsstrang (11) einer Druckmediumsleitung (15) verbunden ist, einen Nehmerzylinder (5), der mit einem ersten Leitungsstrang (12) einer Druckmediumsleitung (15),verbunden ist, wobei mindestens eine dieser Komponenten mit Druckmedium vorbefüllt ist, mindestens eine hydraulische Steckverbindung (2), bestehend aus einem mit einem Ventil (28, 48) versehenem Steckteil (16, 26), das den Austritt von Druckmedium aus diesem verhindert und einer Steckbuchse (17), **dadurch gekennzeichnet, dass** das Ventil (28, 48) beim Zusammenfügen von Steckteil (16, 26) und Steckbuchse (17) geöffnet wird.

2. Hydraulisches System nach Anspruch 1, **dadurch gekennzeichnet, dass** das mit der Steckbuchse (17) zusammenfügbare Steckteil (16, 26) mit einem Ventil (28, 48) versehen ist, welches aus einer Querbohrung (21, 46) im Steckteil (16, 26) und einem Dichtelement (25) gebildet wird, das auf einem zylinderförmigen Bereich (22) dieses Steckerteils (16, 26) angeordnet und auf diesem axial verschiebbar ist.

3. Hydraulisches System nach Anspruch 2, **dadurch gekennzeichnet, dass** das Dichtelement (25) mit einer Wulst (27, 43) versehen ist.

4. Hydraulisches System nach Anspruch 3, **dadurch gekennzeichnet, dass** die Wulst (27, 43) an der der Steckbuchse (17) abgewandten Seite des Dichtelements (25) angeordnet ist.

5. Hydraulisches System nach Anspruch 1, 3 und 4, **dadurch gekennzeichnet, dass** das Dichtelement (25) mit der Wulst (27, 43) in zusammengesteckter Stellung von Steckteil (16, 26) und Steckbuchse (17) Teil einer Dichtungsanordnung zwischen Steckteil (16, 26) und Steckbuchse (17) ist.

6. Hydraulisches System nach Anspruch 1, **dadurch gekennzeichnet, dass** das Steckteil (16, 26) und die Steckbuchse (17) Mittel zur Verriegelung miteinander aufweisen.

7. Hydraulisches System nach Anspruch 1, **dadurch gekennzeichnet, dass** das Steckteil (16 26) endseitig in Richtung Steckbuchse (17) mit mindestens einer Nase (23) versehen ist,

8. Hydraulisches System nach Anspruch 1, **dadurch gekennzeichnet, dass** das Steckteil (16, 26) aus einem Stecker (16) und einer Drehmuffe (26) gebildet wird, die drehbar miteinander verbunden und mit Hilfe einer Halteklammer (35) axial zueinander fixiert sind.

9. Hydraulisches System nach Anspruch 1 bis 3, **dadurch gekennzeichnet, dass** die Steckbuchse (17) mindestens einen Steg (31) aufweist, der beim Zusammenfügen von Steckteil (16, 26) und Steckbuchse (17) an der Wulst (27, 43) des Dichtelements (25) des Steckteils (16, 26) angreift und damit das Dichtelement (25) in axialer Richtung gegenüber dem Steckteil (16, 26) verschiebt.

10. Hydraulisches System nach Anspruch 1, **dadurch gekennzeichnet, dass** die Drehmuffe (26) erste Eingriffsmittel (44) aufweist, welche bei zusammengesteckter Drehmuffe (26) und Steckbuchse (17) mit an der Steckbuchse (17) angeordneten zweiten Eingriffsmitteln (53) eine drehfeste Verbindung zwischen Drehmuffe (26) und Steckbuchse (17) bilden.

11. Hydraulisches System nach einem der vorhergehenden Ansprüche, **dadurch gekennzeichnet, dass** Drehmuffe (26) und Steckbuchse (17) durch einen Bajonettverschluss (54) gegeneinander verriegelbar sind.

12. Verfahren zum Befüllen eines hydraulischen Systems (1), insbesondere für Kraftfahrzeuge mit einem Kupplungsaktor, umfassend ein Druckmediumreservoir (14), einen Geberzylinder (4), der mit einem zweiten Leitungsstrang (11) einer Druckmediumsleitung (15) verbunden ist, einen Nehmerzylinder (5), der mit einem ersten Leitungsstrang (12) einer Druckmediumsleitung (15) verbunden ist, wobei mindestens eine dieser Komponenten mit Druckmedium vorbefüllt ist, mindestens eine hydraulische Steckverbindung (2), bestehend aus einem mit einem Ventil (28, 48) versehenem Steckteil (16, 26), das den Austritt von Druckmedium aus diesem verhindert und einer Steckbuchse (17), **dadurch gekennzeichnet, dass** mindestens ein Teil dieses hydraulischen Systems 1 vorbefüllt ist, und dass Geberzylinder (4), Nehmerzylinder (5) und Druckmediumsleitung (15) durch wiederholtes Betätigen des Geberzylinders (4) befüllt werden.
